# EUROPEAN PATENT APPLICATION

(11) **EP 3 937 298 A1**
(43) Date of publication of application: **12.01.2022**
(21) Application number: 21179539.8
(22) Date of filing: 15.06.2021
(51) Int. Cl.: H01M 50/153, H01M 50/109, H01M 10/04, H01M 50/559, H01M 50/148

(54) **RECHARGEABLE BATTERY**

(30) Priority: 10.07.2020 KR 20200085350
(71) Applicant: Samsung SDI Co., Ltd., Yongin-si, Gyeonggi-do 17084 (KR)
(72) Inventor: Ko, Heejung, 17084 Yongin-si, Gyeonggi-do (KR); Kim, Kijung, 17084 Yongin-si, Gyeonggi-do (KR); Park, Yongjin, 17084 Yongin-si, Gyeonggi-do (KR); Woo, Byongchul, 17084 Yongin-si, Gyeonggi-do (KR); Lee, Jong-Ha, 17084 Yongin-si, Gyeonggi-do (KR)
(74) Representative: Gulde & Partner

(57) **Abstract**

A rechargeable battery comprising an electrode assembly including a first electrode, a second electrode, and a separator between the first electrode and the second electrode; a case connected to the first electrode to house the electrode assembly and including an opening to receive the electrode assembly; a cap plate coupled with the case to cover an outer region of the opening and including a through-hole to expose a center region of the opening; and a terminal plate connected to the second electrode to be insulated from and bonded to the cap plate, and including a flange part covering the through-hole and a protruded part penetrating the through-hole from the flange part.

## Description

### BACKGROUND

### 1. Field

Aspects of embodiments of the present disclosure relate to a rechargeable battery.

### 2. Description of the Related Art

In general, a rechargeable battery is a battery that may be repeatedly charged and discharged.

In recent years, as a demand for wearable devices, such as headphones, earphones, smartwatches, and body-attached medical devices using wireless communication such as Bluetooth, increases, a need for ultra-small rechargeable batteries installed in the wearable devices is increasing.

Such an ultra-small rechargeable battery includes an electrode assembly including two electrodes, a case accommodating the electrode assembly and connected to one electrode of the electrode assembly, and a terminal plate sealing the electrode assembly with the case and connected to the other electrode of the electrode assembly.

The above information disclosed in this Background section is only for enhancement of understanding of the background of the invention, and, therefore, it may contain information that does not form the prior art that is already known in this country to a person of ordinary skill in the art.

### SUMMARY

According to an aspect of one or more embodiments, a rechargeable battery including a terminal plate tightly sealing an electrode assembly with the case and concurrently (e.g., simultaneously) firmly connected to an electrode of the electrode assembly is provided.

According to one or more embodiments, a rechargeable battery includes: an electrode assembly including a first electrode, a second electrode, and a separator between the first electrode and the second electrode; a case connected to the first electrode to house the electrode assembly and including an opening to receive the electrode assembly; a cap plate coupled with the case to cover an outer region of the opening and including a through-hole to expose a center region of the opening; and a terminal plate connected to the second electrode to be insulated from and bonded to the cap plate, and including a flange part covering the through-hole and a protruded part penetrating the through-hole from the flange part, wherein a ratio of a diameter of the protruded part to a diameter of the flange part is 1/10 to 1/3.

The rechargeable battery may further include a thermal fusion layer between the cap plate and the flange part and insulatedly bonding the cap plate and the flange part.

The thermal fusion layer may be melted at a predetermined temperature.

The flange part may be arranged on the cap plate, and the protruded part may be connected to the second electrode through the through-hole from the flange part.

The electrode assembly may further include: a first electrode tab extending from the first electrode and welded to the case; and a second electrode tab extending from the second electrode and welded to the protruded part of the terminal plate.

The flange part may have a wider area than the protruded part.

The flange part may have a thinner thickness than the protruded part.

The flange part and the protruded part may be integrally formed.

The case and the cap plate may have a same polarity as the first electrode, and the terminal plate may have a same polarity as the second electrode.

The diameter of the flange part may be smaller than a diameter of the case.

According to an aspect of one or more embodiments, a rechargeable battery including the terminal plate sealing the electrode assembly firmly with the case and concurrently (e.g., simultaneously) firmly connected to an electrode of the electrode assembly is provided.

### BRIEF DESCRIPTION OF DRAWINGS

FIG. 1 is a perspective view of a rechargeable battery according to an embodiment.
FIG. 2 is a cross-sectional view taken along the line II-II of FIG. 1.
FIG. 3 is a table showing experimental examples illustrating an effect of a rechargeable battery according to an embodiment.

### REFERENCE SIGNS LIST

The following reference signs have been used in the present disclosure:
100: electrode assembly
110: first electrode
120: second electrode
130: separator
140: first electrode tab
150: second electrode tab
200: case
210: opening
300: cap plate
310: through-hole
400: terminal plate
410: flange part
420: protruded part
500: thermal fusion layer
1000: rechargeable battery
D1: diameter of the case
D2: diameter of the flange part
D3: diameter of the protruded part

### DETAILED DESCRIPTION

The present invention will be described more fully hereinafter with reference to the accompanying drawings, in which exemplary embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

In addition, unless explicitly described to the contrary, it is to be understood that terms such as "comprises," "includes," or "have" used in the present specification specify the presence of stated features, numerals, steps, operations, components, parts, or a combination thereof, but do not preclude the presence or addition of one or more other features, numerals, steps, operations, components, parts, or a combination thereof.

Also, in this specification, it is to be understood that when one component is referred to as being "connected" or "coupled" to another component, it may be connected or coupled directly to the other component or connected or coupled to another component with one or more other components intervening therebetween. Also, directly coupled may refer to directly coupled mechanically, and directly connected may refer to directly connected mechanically.

Singular forms are to include plural forms unless the context clearly indicates otherwise.

It is to be understood that, although the terms "first," "second," etc. may be used herein to describe various elements, these elements should not be limited by these terms. These terms are used to distinguish one element from another. For example, a first element could be termed a "second" element, and, similarly, a second element could be termed a "first" element, without departing from the scope of example embodiments of the inventive concept. The terms of a singular form may include plural forms unless the context clearly indicates otherwise.

In addition, terms such as "below," "lower," "above," "upper," and the like are used to describe the relationship of the configurations shown in the drawings. However, the terms are used as a relative concept and are described with reference to the direction indicated in the drawings.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

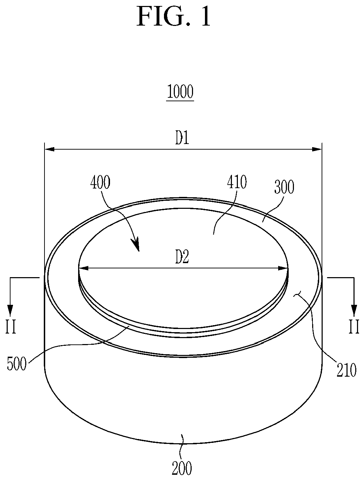

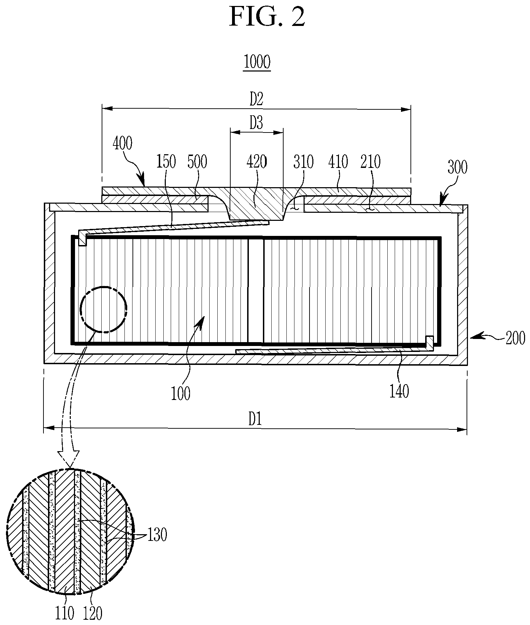

Next, a rechargeable battery according to an embodiment is described with reference to FIG. 1 and FIG. 2.

The rechargeable battery according to one or more embodiments is an ultra-small rechargeable battery and may be a coin-type cell or a button-type cell, but is not limited thereto, and, in another embodiment, may be a cylindrical or pin-type cell.

Here, the coin-type cell or the button-type cell is a thin coin-type or button-shape cell, and may refer to a cell having a ratio of a height to a diameter of 1 or less, however, is not limited thereto; in other words, said ratio of a cell's height to the cell's diameter can be between 0 and 1. The lower limit of said ratio of a cell's height to the cell's diameter can be 0.1 or 0.2. The upper limit of said ratio of a cell's height to the cell's diameter can be 0.9 or 0.8. In an embodiment, the coin-type cell or the button-type cell is cylindrical, and a horizontal cross-section is circular, but the present invention is not limited thereto, and, in other embodiments, the horizontal cross-section may be oval or polygonal. At this time, the diameter may refer to a maximum distance based on the horizontal direction of the battery, and the height may refer to the maximum distance (a distance from the flat bottom surface to the flat top surface) based on the vertical direction of the battery.

FIG. 1 is a perspective view of a rechargeable battery according to an embodiment; and FIG. 2 is a cross-sectional view taken along the line II-ll of FIG. 1.

Referring to FIG. 1 and FIG. 2, a rechargeable battery 1000 according to an embodiment includes an electrode assembly 100, a case 200, a cap plate 300, a terminal plate 400, and a thermal fusion layer 500.

The electrode assembly 100 is housed in the case 200. A lower part of the electrode assembly 100 faces a lower part of the case 200, and an upper part of the electrode assembly 100 faces the cap plate 300 and the terminal plate 400 covering an opening 210 of the case 200. In an embodiment, the upper and lower parts of the electrode assembly 100 may each have a planar shape and may be parallel to each other, but are not limited thereto.

The electrode assembly 100 includes a first electrode 110, a second electrode 120, a separator 130, a first electrode tab 140, and a second electrode tab 150.

The first electrode 110 and the second electrode 120 are separated from each other, and the separator 130 including an insulating material is disposed between the first electrode 110 and the second electrode 120. In an embodiment, the first electrode 110 may be an anode and the second electrode 120 may be a cathode, but the present invention is not limited thereto, and, in another embodiment, the first electrode 110 may be a cathode and the second electrode 120 may be an anode.

In an embodiment, the first electrode 110 has a band shape extending in a direction, and includes an anode coated region of an area where an anode active material layer is coated to a current collector of a metal foil (for example, a Cu foil), and an anode uncoated region of an area where the active material is not coated. The anode uncoated region may be disposed at an end in the extension direction of the first electrode 110.

In an embodiment, the second electrode 120 has a band shape and is spaced apart from the first electrode 110 with the separator 130 interposed therebetween and extends in a direction, and includes a cathode coated region of an area where a cathode active material layer is coated to a current collector of a metal foil (for example, an AI foil), and a cathode uncoated region of an area where the active material is not coated. The cathode uncoated region may be disposed at an end in the extending direction of the second electrode 120.

The separator 130 extends in a direction between the first electrode 110 and the second electrode 120, and is configured to prevent or substantially prevent a short circuit between the first electrode 110 and the second electrode 120.

In an embodiment, the first electrode 110, the separator 130, and the second electrode 120 are sequentially stacked and wound in a jelly roll shape, but are not limited thereto, and may be formed in any of various known shapes. Each of the first electrode 110, the second electrode 120, and the separator 130 may include any of various known materials.

The first electrode tab 140 extends from the first electrode 110 of the electrode assembly 100 to the case 200. The first electrode tab 140 is combined with the lower part of the case 200 to connect the first electrode 110 and the case 200. The first electrode tab 140 is in contact with the first electrode 110 and the case 200. In an embodiment, the first electrode tab 140 is welded to the lower part of the case 200, but is not limited thereto. By the first electrode tab 140, the case 200 has a same polarity as the first electrode 110. However, the invention is not limited thereto.

The second electrode tab 150 extends from the second electrode 120 of the electrode assembly 100 to the terminal plate 400. In an embodiment, the second electrode tab 150 is combined with the protruded part 420 of the terminal plate 400 to connect the second electrode 120 and the terminal plate 400. The second electrode tab 150 is in contact with the second electrode 120 and the terminal plate 400. In an embodiment, the second electrode tab 150 is welded to the surface of the protruded part 420 of the terminal plate 400, but is not limited thereto. The terminal plate 400 has a same polarity as the second electrode 120 by the second electrode tab 150.

In an embodiment, a center pin penetrating the center of the electrode assembly 100 in a vertical direction is disposed at the center portion of the electrode assembly 100, and the center pin may support the first electrode tab 140 and the second electrode tab 150, but is not limited thereto.

The case 200 is connected to the first electrode 110 of the electrode assembly 100 and houses the electrode assembly 100. The case 200 includes the opening 210 that exposes the upper part of the electrode assembly 100. The lower part of the case 200 is connected to the first electrode 110 of the electrode assembly 100 by the first electrode tab 140, and has the same polarity as the first electrode 110. In an embodiment, the case 200 is a cylinder-shaped can that accommodates the jelly roll-shaped electrode assembly 100, but is not limited thereto and may have any of various known shapes. The case 200 may accommodate any of various known electrolyte solutions along with the electrode assembly 100. In an embodiment, an outer surface of the case 200 may be the first electrode terminal of the rechargeable battery 1000, but is not limited thereto. In an embodiment, the upper surface of the flange part 410, which is the outer surface of the terminal plate 400, may be the second electrode terminal of the rechargeable battery 1000, but is not limited thereto. In an embodiment, a plating layer may be coated on the outer surface of the case 200, but the present invention is not limited thereto, and any of various known coating layers may be coated on the outer surface of the case 200.

The opening 210 of the case 200 is covered by the cap plate 300 and the terminal plate 400.

The cap plate 300 is combined with the case 200 to cover the outer region of the opening 210. The cap plate 300 includes a through-hole 310 that exposes the center region of the opening 210. In an embodiment, the cap plate 300 is directly coupled to the side wall of the case 200, which forms the opening 210 of the case 200, by a welding process to cover the outer region of opening 210. In an embodiment, the cap plate 300 has a ring shape by the through-hole 310 formed in the center, but is not limited thereto. The cap plate 300 is combined with the case 200 and has the same polarity as the first electrode 110. In an embodiment, the cap plate 300 includes stainless steel, but is not limited thereto, and may include a metal, such as any of aluminum, nickel, and copper. In an embodiment, the outer surface of the cap plate 300 may be the first electrode terminal of the rechargeable battery 1000, but is not limited thereto.

In an embodiment, a plating layer may be coated on the outer surface of the cap plate 300, but is not limited thereto, and any of various known coating layers may be coated on the outer surface of the cap plate 300.

The terminal plate 400 is connected to the second electrode 120 to be insulated from and bonded to the cap plate 300. The terminal plate 400 covers, preferably fully covers the through-hole 310 of the cap plate 300. The terminal plate 400 is disposed on, preferably directly on the cap plate 300. The terminal plate 400 covers the center region of the opening 210 of the case 200 exposed by the through-hole 310 of the cap plate 300. In an embodiment, since the terminal plate 400 covers the center region of the opening 210 and the cap plate 300 covers the outer region of the opening 210, the opening 210 of the case 200 is completely covered by the terminal plate 400 and the cap plate 300. The terminal plate 400 tightly seals the electrode assembly 100 along with the case 200, the cap plate 300, and the thermal fusion layer 500. The terminal plate 400 is coupled to the second electrode tab 150 of the electrode assembly 100 to be connected to the second electrode 120 of the electrode assembly 100. The terminal plate 400 has the same polarity as the second electrode 120.

The terminal plate 400 includes a flange part 410 and a protruded part 420.

The flange part 410 is disposed on the cap plate 300 and overlaps, preferably fully overlaps the cap plate 300 to cover the through-hole 310. The flange part 410 has a larger area than the protruded part 420; in other words, the flange part's 410 surface is bigger than the protruded part's 420 surface. The flange part 410 may have a larger diameter than the protruded part 420. In an embodiment, the upper surface of the flange part 410 is smaller than a first diameter D1, which is the exterior diameter of the case 200, and has a second diameter D2, which is larger than a third diameter D3, which is an exterior diameter of the lower surface of the protruded part 420; in other words, the case 200 has an exterior diameter D1, the upper surface of the flange part 410 has an exterior diameter D2, and the lower surface of the protruded part 430 has an exterior diameter D3, wherein D1 is larger than D2 and D3. In an embodiment, the flange part 410 has a thinner thickness than the protruded part 420, but is not limited thereto; in other words, the thickness of the flange part 410 in the vertical direction of Fig. 2 is smaller than the thickness of the protruded part 420, but is not limited thereto. The lower surface of the flange part 410 is in contact, preferably in direct contact with the thermal fusion layer 500, and the flange part 410 is insulatedly bonded to the cap plate 300 by the thermal fusion layer 500. In an embodiment, an upper surface of the flange part 410 may be the second electrode terminal of the rechargeable battery 1000.

The protruded part 420 is protruded from the flange part 410 and penetrates the through-hole 310 towards the electrode assembly 100. The protruded part 420 is connected to the second electrode 120 through the through-hole 310 from the flange part 410. The lower surface of the protruded part 420 is bonded to the second electrode tab 150. In an embodiment, the lower surface of the protruded part 420 may be welded to the second electrode tab 150, but is not limited thereto. As the protruded part 420 is combined with the second electrode tab 150, the protruded part 420 and the flange part 410 of the terminal plate 400 have the same polarity as the second electrode 120. The lower surface of the protruded part 420 combined with the second electrode tab 150 may have a smaller diameter than the upper surface of the flange part 410, which may be an electrode terminal. The lower surface of the protruded part 420 has the third diameter D3, which is an exterior diameter that is smaller than the first diameter D1 as the exterior diameter of the case 200 and the second diameter D2 as the exterior diameter of the upper surface of flange part 410. In an embodiment, a ratio of the third diameter D3 of the lower surface of the protruded part 420 to the second diameter D2 of the upper surface of the flange part 410 is 1/10 to 1/3. That is, the third diameter D3 of the protruded part 420/the second diameter D2 of the flange part 410 is 1/10 to 1/3.

In an embodiment, a welding area of the second electrode tab 150 welded to the protruded part 420 is determined according to the ratio of the third diameter D3 of the protruded part 420 to the second diameter D2 of the flange part 410 of the terminal plate 400. In an embodiment, since the ratio of the third diameter D3 of the protruded part 420 to the second diameter D2 of the flange part 410 is 1/10 to 1/3, the second electrode tab 150 is firmly coupled to the protruded part 420. Said ratio of the third diameter D3 of the protruded part 420 to said second diameter D2 of the flange part 410 may have a lower boundary of 4/30 or 5/30, and/or may have an upper boundary of 9/30 or 8/30.

In an embodiment, the protruded part 420 and the flange part 410 are integrally formed, but are not limited thereto, and, in an embodiment, different materials may be combined to form the terminal plate 400.

In an embodiment, a plating layer may be coated on the outer surface of the terminal plate 400, but is not limited thereto, and any of various known coating layers may be coated on the outer surface of the terminal plate 400.

The thermal fusion layer 500 is disposed between the cap plate 300 and the flange part 410 of the terminal plate 400 and is insulatedly bonded between the cap plate 300 and the flange part 410 of the terminal plate 400. The thermal fusion layer 500 contains an insulating material and is configured to insulate between the cap plate 300 and the terminal plate 400. In an embodiment, the thermal fusion layer 500 is thermally fused between the cap plate 300 and the flange part 410 of the terminal plate 400 by using heat or a laser beam. The thermal fusion layer 500 may include any of various known materials for insulating and bonding between the cap plate 300 and the terminal plate 400. By bonding the thermal fusion layer 500 between the cap plate 300 and the terminal plate 400, the opening 210 of the case 200 to which the electrode assembly 100 is housed is completely sealed by the cap plate 300, the terminal plate 400, and the thermal fusion layer 500.

In an embodiment, the thermal fusion layer 500 is cured by heat, but may be melted at a predetermined temperature. In an embodiment, the predetermined temperature at which the thermal fusion layer 500 melts may be a temperature that exceeds a temperature of heat for curing the thermal fusion layer 500, but is not limited thereto. In an embodiment, the predetermined temperature at which the thermal fusion layer 500 melts may be a temperature that exceeds a temperature of heat for curing the thermal fusion layer 500 by up to 10% or by up to 20% of the temperature of heat for curing the thermal fusion layer 500, but is not limited thereto.

For example, the thermal fusion layer 500 may include a thermosetting resin and/or a thermoplastic resin. The thermosetting resin and/or the thermoplastic resin of the thermal fusion layer 500 may be laminated in a plurality of layers, but are not limited thereto. The thermosetting resin of the thermal fusion layer 500 is cured by heat, and may include any of various known thermosetting resins, such as any of a phenol resin, a urea resin, a melamine resin, an epoxy resin, and a polyester resin. In an embodiment, the thermoplastic resin of the thermal fusion layer 500 includes a polypropylene resin that melts at a predetermined temperature, but is not limited thereto, and may include any of various known thermoplastic resins, such as any of polystyrene, polyethylene, and a polyvinyl chloride resin.

According to the ratio of the third diameter D3 of the protruded part 420 to the second diameter D2 of the flange part 410 of the terminal plate 400, the bonding area of the thermal fusion layer 500 bonding the flange part 410 and the cap plate 300 is determined. In an embodiment, the ratio of the third diameter D3 of the protruded part 420 to the second diameter D2 of the flange part 410 is 1/10 to 1/3, such that the flange part 410 and the cap plate 300 are firmly bonded.

As described above, in the rechargeable battery 1000 according to an embodiment, the welding area of the second electrode tab 150 welded to the protruded part 420 and the bonding area of the thermal fusion layer 500 bonding the flange part 410 and the cap plate 300 are determined according to the ratio of the third diameter D3 of the protruded part 420 to the second diameter D2 of the flange part 410 of the terminal plate 400, and, as the ratio of the third diameter D3 of the protruded part 420 to the second diameter D2 of the flange part 410 is 1/10 to 1/3, the second electrode tab 150 is firmly coupled to the protruded part 420, and concurrently (e.g., simultaneously) the flange part 410 and the cap plate 300 are firmly bonded.

That is, since the third diameter D3 of the protruded part 420/the second diameter D2 of the flange part 410 is 1/10 to 1/3, or said ratio of the third diameter D3 of the protruded part 420 to said second diameter D2 of the flange part 410 may have a lower boundary of 4/30 or 5/30, and/or may have an upper boundary of 9/30 or 8/30, the rechargeable battery 1000 including the terminal plate 400 firmly sealing the electrode assembly 100 along with the case 200, the cap plate 300, and the thermal fusion layer 500 and concurrently (e.g., simultaneously firmly) connected to the second electrode tab 150 of the electrode assembly 100 is provided.

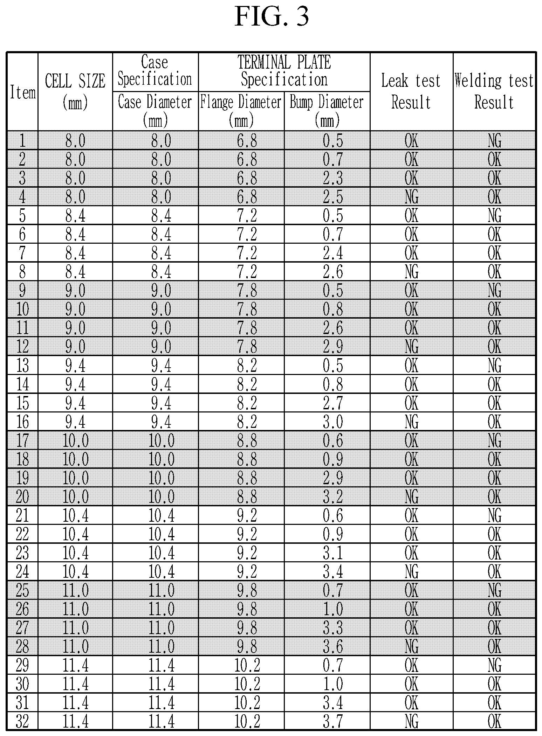

Herein, some experimental examples confirming the effect of the rechargeable battery 1000 according to an embodiment described above are described with reference to FIG. 3.

FIG. 3 is a table showing experimental examples illustrating an effect of a rechargeable battery according to an embodiment.

In FIG. 3, a CELL SIZE may represent the exterior diameter of the rechargeable battery of the coin type, a Case Specification may represent a specification of the case of the rechargeable battery, and a TERMINAL PLATE Specification may represent a specification of the terminal plate.

Also, in FIG. 3, a Case Diameter refers to the first diameter D1 of the case 200 shown in FIG. 2, a Flange Diameter refers to the second diameter D2 of the flange part 410 of the terminal plate 400 shown in FIG. 2, a Bump Diameter refers to the third diameter D3 of the protruded part 420 of the terminal plate 400 shown in FIG. 2, a Leak test Result refers to a result confirming bonding reliability between the flange part 410 and the cap plate 300 by the thermal fusion layer 500 shown in FIG. 2, and a Welding test Result refers to a result confirming welding reliability between the second electrode tab 150 and the protruded part 420 shown in FIG. 2.

Referring to FIG. 3, Experimental Example 1 to Experimental Example 32 (1 to 32) were performed to confirm the effect depending on a numerical limitation of the rechargeable battery according to an embodiment described above.

In Experimental Example 1 to Experimental Example 4, the first diameter (the Case Diameter) of the case is 8 mm, the second diameter (the Flange Diameter) of the flange part of the terminal plate is 6.8 mm, and the third diameter (the Bump Diameter) of the protruded part of the terminal plate is 0.5 mm to 2.5 mm.

In Experimental Example 1, the third diameter (the Bump Diameter) of the protruded part of the terminal plate is 0.5 mm in which the third diameter of the protruded part/the second diameter of the flange part is less than 1/10, and, in this case, there was no abnormality in the bonding reliability confirmation result (the Leak test Result) (OK), but the welding reliability confirmation result (the Welding test Result) was abnormal (NG).

In Experimental Example 2, the third diameter (the Bump Diameter) of the protruded part of the terminal plate is 0.7 mm in which the third diameter of the protruded part/the second diameter of the flange part is substantially 1/10, and, in this case, there was no abnormality in the bonding reliability confirmation result (the Leak test Result) and the welding reliability confirmation result (the Welding test Result) (OK).

In Experimental Example 3, the third diameter (the Bump Diameter) of the protruded part of the terminal plate is 2.3 mm in which the third diameter of the protruded part/the second diameter of the flange part is substantially 1/3, and, in this case, there was no abnormality in the bonding reliability confirmation result (the Leak test Result) and the welding reliability confirmation result (the Welding test Result) (OK).

In Experimental Example 4, the third diameter (the Bump Diameter) of the protruded part of the terminal plate is 2.5 mm in which the third diameter of the protruded part/the second diameter of the flange part exceeds 1/3, and, in this case, there was no abnormality in the welding reliability confirmation result (the Welding test Result) (OK), but an abnormality occurred in the bonding reliability confirmation result (the Leak test Result) (NG).

As confirmed in Experimental Example 2 and Experimental Example 3, when the ratio of the third diameter of the protruded part to the second diameter of the flange part is 1/10 to 1/3, the effect that the second electrode tab is firmly bonded to the protruded part and concurrently (e.g., simultaneously) the flange part and the cap plate are firmly bonded was confirmed.

In addition, as confirmed in Experimental Example 1 and Experimental Example 4, when the ratio of the third diameter of the protruded part to the second diameter of the flange part is less than 1/10 or more than 1/3, it was confirmed that the second electrode tab is not firmly attached to the protruded part or the flange part and the cap plate were not firmly bonded.

In other words, as the result confirmed through Experimental Example 1 to Experimental Example 4, it was confirmed that the numerical limitation that the ratio of the third diameter of the protruded part to the second diameter of the flange part is 1/10 to 1/3 is a threshold range realizing the effect that the second electrode tab is firmly bonded to the protruded part and concurrently (e.g., simultaneously) the flange part and the cap plate are firmly bonded.

Also, as confirmed in Experimental Example 5 to Experimental Example 32, when the ratio of the third diameter of the protruded part to the second diameter of the flange part was 1/10 to 1/3, the effect was confirmed that the second electrode tab is firmly bonded to the protruded part and concurrently (e.g., simultaneously) the flange part and the cap plate are firmly bonded, and when the ratio of the third diameter of the protruded part to the second diameter of the flange part is less than 1/10 or more than 1/3, it was confirmed that the second electrode tab is not firmly bonded to the protruded part or the flange part and the cap plate are not firmly bonded.

In other words, as the result confirmed through Experimental Example 5 to Experimental Example 32, it was confirmed that the numerical limitation in which the ratio of the third diameter of the protruded part to the second diameter of the flange part is 1/10 to 1/3 is a threshold range that realizes the effect that the second electrode tab is firmly bonded to the protruded part and concurrently (e.g., simultaneously) the flange part and the cap plate are firmly bonded.

While this invention has been described in connection with what are presently considered to be some practical example embodiments, it is to be understood that the invention is not limited to the disclosed embodiments. On the contrary, it is intended to cover various modifications and equivalent arrangements included within the scope of the appended claims.

## Claims

1. A rechargeable battery (1000), comprising:
an electrode assembly (100) comprising a first electrode (110), a second electrode (120), and a separator (130) between the first electrode (110) and the second electrode (120);
a case (200) connected to the first electrode (110) to house the electrode assembly (100) and comprising an opening (210) configured to receive the electrode assembly (100);
a cap plate (300) coupled with the case (200) to cover an outer region of the opening (210) and comprising a through-hole (310) to expose a center region of the opening (210); and
a terminal plate (400) connected to the second electrode (120) to be insulated from and bonded to the cap plate (300), and comprising a flange part (410) covering the through-hole (310) and a protruded part (420) penetrating the through-hole (310) from the flange part (410),
wherein a ratio of a diameter (D3) of the protruded part (420) to a diameter (D2) of the flange part (410) is 1/10 to 1/3.

2. The rechargeable battery (1000) of claim 1, further comprising a thermal fusion layer (500) between the cap plate (300) and the flange part (410) and insulatedly bonding the cap plate (300) and the flange part (410).

3. The rechargeable battery (1000) of claim 2, wherein the thermal fusion layer (500) is melted at a predetermined temperature.

4. The rechargeable battery (1000) of claim 2 and claim 3, wherein the thermal fusion layer (500) comprises a thermosetting resin and/or a thermoplastic resin.

5. The rechargeable battery (1000) according to any of the preceding claims, wherein the flange part (410) is arranged on the cap plate (300), and
the protruded part (420) is connected to the second electrode (120) through the through-hole (310) from the flange part (410).

6. The rechargeable battery (1000) of claim 5, wherein the electrode assembly (100) further comprises:
a first electrode tab (140) extending from the first electrode (110) and coupled to the case (200); and
a second electrode tab (150) extending from the second electrode (120) and coupled to the protruded part (420) of the terminal plate (400).

7. The rechargeable battery (1000) of claim 6, wherein:
the first electrode tab (140) extending from the first electrode (110) is welded to the case (200); and/or
the second electrode tab (150) extending from the second electrode (120) is welded to the protruded part (420) of the terminal plate (400).

8. The rechargeable battery (1000) according to any of the preceding claims, wherein the flange part (410) has a wider area than the protruded part (420).

9. The rechargeable battery (1000) according to any of the preceding claims, wherein the flange part (410) has a thinner thickness than the protruded part (420).

10. The rechargeable battery (1000) according to any of the preceding claims, wherein the flange part (410) and the protruded part (420) are integrally formed.

11. The rechargeable battery (1000) according to any of the preceding claims,
wherein
the case (200) and the cap plate (300) have a same polarity as the first electrode (110), and
the terminal plate (400) has a same polarity as the second electrode (120).

12. The rechargeable battery (1000) according to any of the preceding claims, wherein the diameter (D2) of the flange part (410) is smaller than a diameter (D1) of the case (200) .

13. The rechargeable battery (1000) according to any of the preceding claims, wherein the ratio of the diameter (D3) of the protruded part (420) to the diameter (D2) of the flange part (410) is 4/30 to 9/30.

14. The rechargeable battery (1000) according to claim 13, wherein the ratio of the diameter (D3) of the protruded part (420) to the diameter (D2) of the flange part (410) is 5/30 to 8/30.
